# EUROPÄISCHE PATENTSCHRIFT

(11) **EP 3 565 221 B1**
(45) Veröffentlichungstag und Bekanntmachung des Hinweises auf die Patenterteilung: **28.10.2020**
(21) Anmeldenummer: 18170056.8
(22) Anmeldetag: 30.04.2018
(51) Int. Cl.: H04L 29/12

(54) **VERFAHREN ZUR REGISTRIERUNG VON INDUSTRIELLEN AUTOMATISIERUNGSGERÄTEN ODER KOMMUNIKATIONSGERÄTEN ZUGEORDNETEN GERÄTE-NAMEN IN EINEM NAMENSDIENST-SYSTEM UND KONTROLL-KOMPONENTE**
METHOD FOR REGISTERING DEVICE NAMES ASSIGNED TO INDUSTRIAL AUTOMATION DEVICES OR COMMUNICATION DEVICES IN A NAME SERVICE SYSTEM AND CONTROL COMPONENT
PROCÉDÉ D'ENREGISTREMENT DES NOMS D'APPAREIL ASSOCIÉS AUX APPAREILS D'AUTOMATISATION INDUSTRIELS OU AUX APPAREILS DE COMMUNICATION DANS UN SYSTÈME DE SERVICE D'ATTRIBUTION DE NOM ET COMPOSANTE DE COMMANDE

(43) Veröffentlichungstag der Anmeldung: 06.11.2019
(73) Patentinhaber: Siemens Aktiengesellschaft, 80333 München (DE)
(72) Erfinder: Albrecht, Harald, 90475 Nürnberg (DE); Höme, Stephan, 90475 Nürnberg (DE); Talanis, Thomas, 90475 Nürnberg (DE)

(56) Entgegenhaltungen:
- STAPP CISCO SYSTEMS M ET AL: "A DNS Resource Record (RR) for Encoding Dynamic Host Configuration Protocol (DHCP) Information (DHCID RR); rfc4701.txt", A DNS RESOURCE RECORD (RR) FOR ENCODING DYNAMIC HOST CONFIGURATION PROTOCOL (DHCP) INFORMATION (DHCID RR)?; RFC4701.TXT, INTERNET ENGINEERING TASK FORCE, IETF; STANDARD, INTERNET SOCIETY (ISOC) 4, RUE DES FALAISES CH- 1205 GENEVA, SWITZERLAND, 1. Oktober 2006 (2006-10-01), XP015048673,

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen im Wesentlichen selbständigen Betrieb von Steuerungseinrichtungen, Sensoren, Maschinen und technischen Anlagen. Eine wesentliche Grundlage für eine zuverlässige Bereitstellung von Überwachungs-, Steuerungs- und Regelungsfunktionen mittels eines Prozessautomatisierungssystems besteht in einer vollständigen und korrekten Erfassung und Abbildung von Komponenten des industriellen Prozessautomatisierungssystems in einem Engineerung- bzw. Projektierungssystem.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In EP 2 975 477 A1 ist ein Verfahren zur Registrierung von Gerätenamen aus einem industriellen Automatisierungssystem bei einem Kommunikationsnetz-Namensdienst beschrieben, bei dem mittels einer Regelbasis geräteindividuell festgelegt wird, für welche Kommunikationsgeräte des industriellen Automatisierungssystems eine Registrierung ihres jeweiligen Gerätenamens beim Kommunikationsnetz-Namensdienst zulässig bzw. erforderlich ist. Mittels geräteseitiger dezentraler Namensdienst-Agenten werden Kommunikationsnetzadressen von Kommunikationsgeräten an einen zentralen Namensdienst-Agenten des industriellen Automatisierungssystems gemeldet. Bei einer zu registrierenden Name-Adress-Zuordnung übermittelt der zentrale Namensdienst-Agent eine die Name-Adress-Zuordnung umfassende Registrierungsanforderung an den Kommunikationsnetz-Namensdienst. Innerhalb des industriellen Automatisierungssystems kann nur der zentrale Namensdienst-Agent Registrierungsanforderungen zur Verarbeitung an den Kommunikationsnetz-Namensdienst übermitteln.

EP 2 996 311 A1 betrifft ein Verfahren zur Bereitstellung von Informationen über Kommunikationsgerätenamen innerhalb eines industriellen Automatisierungssystems, bei dem bei einer Zuweisung bzw. Änderung eines Gerätenamens eines Kommunikationsgeräts ein Datagramm mit einer Aktualisierungsanforderung zur Zuordnung seiner Kommunikationsnetzadresse zum geänderten oder zugewiesenen Gerätenamen insbesondere an ausgewählte Kommunikationsgeräte verbreitet wird. Die ausgewählten Kommunikationsgeräte erzeugen oder ändern auf die Aktualisierungsanforderung jeweils einen dem Kommunikationsgerät mit dem geänderten oder zugewiesenen Gerätenamen zugeordneten Datensatz in ihrer jeweiligen Datenbank. Dabei umfasst der Datensatz die Zuordnung der Kommunikationsnetzadresse zum Gerätenamen.

In EP 3 041 199 A1 ist ein Verfahren zur Ermittlung von Kommunikationsgeräteadressen innerhalb eines Kommunikationsnetzes eines industriellen Automatisierungssystems beschrieben, bei dem ausgewählten Kommunikationsgeräten des industriellen Automatisierungssystems jeweils eine Speichereinheit zugeordnet ist, in der jeweils zumindest ein Teil von Namensdienst-Informationen temporär gespeichert wird, die durch einen Kommunikationsnetz-Namensdienst bereitgestellt werden. Ein Verbindungsaufbau von einem ersten ausgewählten Kommunikationsgerät zu einem zweiten Kommunikationsgerät wird bei einer auf zumindest das erste und zweite Kommunikationsgerät verteilten Anwendung bzw. Funktion des industriellen Automatisierungssystems anhand der Namensdienst-Informationen gestartet, die in der zum ersten Kommunikationsgerät zugeordneten Speichereinheit gespeichert sind. Die Anwendung bzw. Funktion löst bei einem fehlgeschlagenen Verbindungsaufbauversuch eine zumindest teilweise Aktualisierung der temporär gespeicherten Namensdienst-Informationen aus.

EP 3 059 930 A1 offenbart ein Verfahren zur Konfiguration eines Kommunikationsgeräts eines industriellen Automatisierungssystems, bei dem aus zumindest einem mittels Routerbekanntgabe-Nachrichten übermittelten Präfix und aus einem geräteindividuellen Schnittstellenidentifikator selbständig eine dem Kommunikationsgerät zugeordnete Kommunikationsnetzadresse erzeugt wird. Die Routerbekanntgabe-Nachrichten werden durch zumindest einen innerhalb eines Teilnetzes zugeordneten Router übermittelt. Das Kommunikationsgerät fragt bei zumindest einem Server eines Namensdienst-Systems entsprechend einem Namensauflösungsprotokoll ab, welche Kommunikationsnetzadressen seinem Kommunikationsgerätnamen zugeordnet sind. Die beim Server des Namensdienst-Systems abgefragten Kommunikationsnetzadressen werden auf eine Übereinstimmung mit dem Präfix überprüft. Das Kommunikationsgerät ordnet sich nur die beim Server des Namensdienst-Systems abgefragten Kommunikationsnetzadressen zu, die eine Übereinstimmung mit dem durch den Router übermittelten Präfix aufweisen.

Aus EP 3 091714 B1 ist bekannt, dass Kommunikationsgeräte eines industriellen Automatisierungssystems jeweils mittels einer Namensdienst-Komponente überprüfen, ob dem jeweiligen Kommunikationsgerät ein Gerätename mit einem topologischen bzw. hierarchischen Namensbestandteil zugeordnet ist, der eine räumliche oder hierarchische Anordnung des jeweiligen Kommunikationsgeräts im wesentlichen vollständig bezeichnet. Bei einem positiven Überprüfungsergebnis behandeln die Kommunikationsgeräte jeweils ihren zugeordneten Gerätenamen als vollständigen Gerätenamen. Bei einem negativen Überprüfungsergebnis erzeugen die Kommunikationsgeräte jeweils aus mittels Nachrichten mit Router-Bekanntgaben verbreiteten topologischen bzw. hierarchischen Namensbestandteilen sowie einem innerhalb ihres jeweiligen Teilnetzes eindeutigen Namensbestandteil selbständig ihren vollständigen Gerätenamen.

In industriellen Automatisierungssystemen werden Automatisierungs- oder Kommunikationsgeräte bevorzugt über Gerätenamen anstatt über Kommunikationsnetzadressen angesprochen. Aus diesem Grund kommt einer Erkennung mehrfach zugeordneter identischer Gerätenamen bzw. einer Vermeidung von Namenskonflikten in einem Domain Name System (DNS) eine hohe Bedeutung zu.

Bei Einsatz von DHCP (Dynamic Host Configuration Protocol) bzw. DHCPv6 (Dynamic Host Configuration Protocol for Internet Protocol Version 6) können Namenskonflikte entsprechend Internet Engineering Task Force (IETF), Request for Comments (RFC) 4701 und 4703 (siehe https://tools.ietf.org/html/ rfc4701 und https://tools.ietf.org/html/rfc4703) durch einen DHCP- bzw. DHCPv6-Server grundsätzlich erkannt werden. Dies gilt jedoch nur dann, wenn pro Automatisierungs- oder Kommunikationsgerät genau ein DHCP- bzw. DHCPv6-Server für DNS-Registrierungen verantwortlich ist. Demnach kann es zu Namenskonflikten kommen, sobald mehrere DHCP- bzw. DHCPv6-Server gleichzeitig eingesetzt werden oder geräteseitig DNS-Clients für DNS-Registrierungen verwendet werden.

Darüber hinaus führt ein Geräteaustausch, also ein Austausch eines zuvor verwendeten Geräts durch ein Ersatz-Gerät, entsprechend IETF RFC 4701 und 4703 zu einer geänderten Geräteidentität. Dies erschwert einen Geräteaustausch unter Namensbeibehaltung, da ein zuvor verwendetes Gerät und ein Ersatz-Gerät entsprechend IETF RFC 4701 und 4703 grundsätzlich als unterschiedliche Geräte behandelt werden.

Der vorliegenden Erfindung liegt die Aufgabe zugrunde, ein Verfahren zur Registrierung von industriellen Automatisierungsgeräten oder Kommunikationsgeräten zugeordneten Gerätenamen in einem Namensdienst-System zu schaffen, das eine zuverlässige Erkennung von Namenskonflikten ermöglicht und einen Geräteaustausch unter Namensbeibehaltung unterstützt, sowie eine geeignete Vorrichtung zur Durchführung des Verfahrens anzugeben.

Diese Aufgabe wird erfindungsgemäß durch ein Verfahren mit den in Patentanspruch 1 angegebenen Merkmalen und durch eine Kontroll-Komponente mit den in Patentanspruch 16 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Registrierung von industriellen Automatisierungsgeräten oder Kommunikationsgeräten zugeordneten Gerätenamen in einem Namensdienst-System, insbesondere einem Domain Name System (DNS), umfasst das Namensdienst-System zumindest einen Namensdienst-Server, der Informationen über Zuordnungen zwischen Gerätenamen und Kommunikationsnetzadressen entsprechend einem Namensauflösungsprotokoll bereitstellt. Vorzugsweise stellt der Namensdienst-Server Informationen über Zuordnungen zwischen Gerätenamen und Kommunikationsnetzadressen entsprechend IETF RFC 1034 und IETF RFC 1035 bereit. Die Gerätenamen können beispielsweise Fully Qualified Domain Names (FQDN) sein.

Zumindest ausgewählte Automatisierungs- oder Kommunikationsgeräte umfassen erfindungsgemäß jeweils eine Namensdienst-Komponente, insbesondere einen DNS Update Client. Mittels ihrer Namensdienst-Komponente steuern die ausgewählten Automatisierungs- oder Kommunikationsgeräte jeweils ein Senden einer Registrierungsanforderung mit einer Zuordnung zwischen ihrem jeweils zugeordneten Gerätenamen und zumindest einer jeweils konfigurierten Kommunikationsnetzadresse an den Namensdienst-Server. Die Registrierungsanforderungen können beispielsweise DNS Update Requests sein.

Erfindungsgemäß ist den Namensdienst-Komponenten jeweils eine Kontroll-Komponente zugeordnet, die ein Senden einer Registrierungsanforderung freigibt oder blockiert. Die Kontroll-Komponenten fragen vor einem Freigeben oder Blockieren einer Registrierungsanforderung für ein ausgewähltes Automatisierungs- oder Kommunikationsgerät jeweils ab, welcher Gerätekonfigurationsidentifikator dem Gerätenamen des jeweiligen ausgewählten Automatisierungs- oder Kommunikationsgeräts im Namensdienst-System zugeordnet ist. Die Gerätekonfigurationsidentifikatoren werden vorteilhafterweise im Rahmen einer Adress-, Namens- bzw. Namensdienstkonfiguration eines ausgewählten Automatisierungs- oder Kommunikationsgeräts erzeugt bzw. können beispielsweise Dynamic Host Configuration Identifier (DHCID) entsprechend IETF RFC 4701 sein.

Die Kontroll-Komponenten überprüfen erfindungsgemäß jeweils bei einer bestehenden Zuordnung, ob der dem Gerätenamen des jeweiligen ausgewählten Automatisierungs- oder Kommunikationsgeräts im Namensdienst-System zugeordnete Gerätekonfigurationsidentifikator mit einem dem jeweiligen ausgewählten Automatisierungs- oder Kommunikationsgerät zugeordneten Gerätekonfigurationsidentifikator übereinstimmt. Bei einer fehlenden Zuordnung eines Gerätekonfigurationsidentifikators bzw. bei einem positiven Überprüfungsergebnis geben die Kontroll-Komponenten jeweils ein Senden der Registrierungsanforderung frei. Dagegen blockieren die Kontroll-Komponenten jeweils bei einem negativen Überprüfungsergebnis ein Senden der Registrierungsanforderung in Abhängigkeit einer Erreichbarkeitsüberprüfung zu zumindest einer dem jeweiligen Gerätenamen im Namensdienst-System zugeordnete Kommunikationsnetzadresse. Auf diese Weise können je nach Anwendungsfall - Erst-Inbetriebnahme, Geräteaustausch, Adressänderung/Geräteumzug oder mehrfache Vergabe identischer Namen - geeignete Maßnahmen zur Bereitstellung konsistenter DNS-Informationen eingeleitet werden.

Erfindungsgemäß blockieren die Kontroll-Komponenten jeweils bei einer bestehenden Erreichbarkeit eines Automatisierungs- oder Kommunikationsgeräts mit der dem jeweiligen Gerätenamen zugeordneten Kommunikationsnetzadresse ein Senden der Registrierungsanforderung. Darüber hinaus können die Kontroll-Komponenten jeweils bei einer bestehenden Erreichbarkeit eines Automatisierungs- oder Kommunikationsgeräts mit der dem jeweiligen Gerätenamen zugeordneten Kommunikationsnetzadresse beispielsweise eine Warnung über einen mehrfach zugeordneten Gerätenamen signalisieren. Erfindungsgemäß geben die Kontroll-Komponenten jeweils bei einer fehlenden Erreichbarkeit eines Automatisierungs- oder Kommunikationsgeräts mit der dem jeweiligen Gerätenamen zugeordneten Kommunikationsnetzadresse ein Senden der Registrierungsanforderung frei. Damit kann eine Namensbeibehaltung bei einem Geräteaustausch zuverlässig unterstützt werden. Die Erreichbarkeitsüberprüfung erfolgt vorteilhafterweise mittels Echo Request entsprechend Internet Control Message Protocol (ICMP) bzw. Internet Control Message Protocol for the Internet Protocol Version 6 (ICMPv6).

Mittels der Registrierungsanforderung wird bei einer fehlenden Zuordnung eines Gerätekonfigurationsidentifikators insbesondere eine Registrierung der Zuordnung zwischen dem Gerätenamen und der Kommunikationsnetzadresse des jeweiligen Automatisierungs- oder Kommunikationsgeräts im Namensdienst-System veranlasst. Damit werden für eine Erst-Inbetriebnahme geeignete Maßnahmen zur Bereitstellung konsistenter DNS-Informationen umgesetzt. Entsprechend einer weiteren vorteilhaften Ausgestaltung der vorliegenden Erfindung wird mittels der Registrierungsanforderung a) bei einem positiven Überprüfungsergebnis bzw. b) bei einer fehlenden Erreichbarkeit eines Automatisierungs- oder Kommunikationsgeräts mit der dem jeweiligen Gerätenamen zugeordneten Kommunikationsnetzadresse eine Registrierung zumindest einer aktualisierten Kommunikationsnetzadresse des jeweiligen Automatisierungs- oder Kommunikationsgeräts im Namensdienst-System veranlasst. Auf diese Weise werden a) für eine Adressänderung bzw. b) für einen Geräteaustausch geeignete Maßnahmen zur Bereitstellung konsistenter DNS-Informationen umgesetzt.

Die Namensdienst-Komponenten können beispielsweise jeweils einen DNS Update Client bzw. Namensdienst-Client für dynamisches DNS umfassen, so dass die ausgewählten Automatisierungs- oder Kommunikationsgeräte Registrierungsanforderungen jeweils mittels ihres Namensdienst-Client für dynamisches DNS senden können. Entsprechend einer weiteren vorteilhaften Ausgestaltung der vorliegenden Erfindung ist den ausgewählten Automatisierungs- oder Kommunikationsgeräten jeweils ein Konfigurationsserver zur Adress-, Namens- bzw. Namensdienstkonfiguration, insbesondere ein DHCP- bzw. DHCPv6-Server, zugeordnet. In diesem Fall werden Registrierungsanforderungen für die ausgewählten Automatisierungs- oder Kommunikationsgeräte jeweils mittels des zugeordneten Konfigurationsservers gesendet. Insbesondere steuern die ausgewählten Automatisierungs- oder Kommunikationsgeräte vorteilhafterweise jeweils mittels ihrer Namensdienst-Komponente ein Senden einer Registrierungsanforderung durch den zugeordneten Konfigurationsservers. Darüber hinaus können die ausgewählten Automatisierungs- oder Kommunikationsgeräte einem industriellen Automatisierungs- oder Kommunikationssystem mit mehreren DHCP- bzw. DHCPv6-Servern zugeordnet sein. Auch in diesem Fall können mehrfach zugeordnete identische Namen zuverlässig erkannt und geeignet behandelt werden.

Die erfindungsgemäße Kontroll-Komponente ist zur Durchführung eines Verfahrens entsprechend vorangehenden Ausführungen geeignet und dafür eingerichtet und ausgestaltet, ein durch eine Namensdienst-Komponente eines ausgewählten Automatisierungs- oder Kommunikationsgeräts gesteuertes Senden einer Registrierungsanforderung an einen Namensdienst-Server eines Namensdienst-Systems freizugeben oder zu blockieren. Dabei umfasst die Registrierungsanforderung eine Zuordnung zwischen einem Gerätenamen und zumindest einer konfigurierten Kommunikationsnetzadresse des ausgewählten Automatisierungs- oder Kommunikationsgeräts. Außerdem ist die Kontroll-Komponente dafür eingerichtet und ausgestaltet, vor einem Freigeben oder Blockieren einer Registrierungsanforderung für ein ausgewähltes Automatisierungs- oder Kommunikationsgerät abzufragen, welcher Gerätekonfigurationsidentifikator dem Gerätenamen des ausgewählten Automatisierungs- oder Kommunikationsgeräts im Namensdienst-System zugeordnet ist.

Erfindungsgemäß ist die Kontroll-Komponente dafür eingerichtet und ausgestaltet, bei einer bestehenden Zuordnung zu überprüfen, ob der dem Gerätenamen des ausgewählten Automatisierungs- oder Kommunikationsgeräts im Namensdienst-System zugeordnete Gerätekonfigurationsidentifikator mit einem dem ausgewählten Automatisierungs- oder Kommunikationsgerät zugeordneten Gerätekonfigurationsidentifikator übereinstimmt. Darüber hinaus ist die Kontroll-Komponente dafür eingerichtet und ausgestaltet, bei einer fehlenden Zuordnung eines Gerätekonfigurationsidentifikators bzw. bei einem positiven Überprüfungsergebnis ein Senden der Registrierungsanforderung freizugeben. Des Weiteren ist die Kontroll-Komponente dafür eingerichtet und ausgestaltet, bei einem negativen Überprüfungsergebnis ein Senden der Registrierungsanforderung in Abhängigkeit einer Erreichbarkeitsüberprüfung zu zumindest einer dem jeweiligen Gerätenamen im Namensdienst-System zugeordnete Kommunikationsnetzadresse zu blockieren.

Die vorliegende Erfindung wird nachfolgend an einem Ausführungsbeispiel anhand der Zeichnung näher beschrieben. Es zeigt
- Figur 1: ein mehrere Zellen umfassendes industrielles Automatisierungssystem,
- Figur 2: ein Ablaufdiagramm für eine Registrierung neuer oder geänderter Gerätenamen bzw. -adressen in einem Domain Name System.

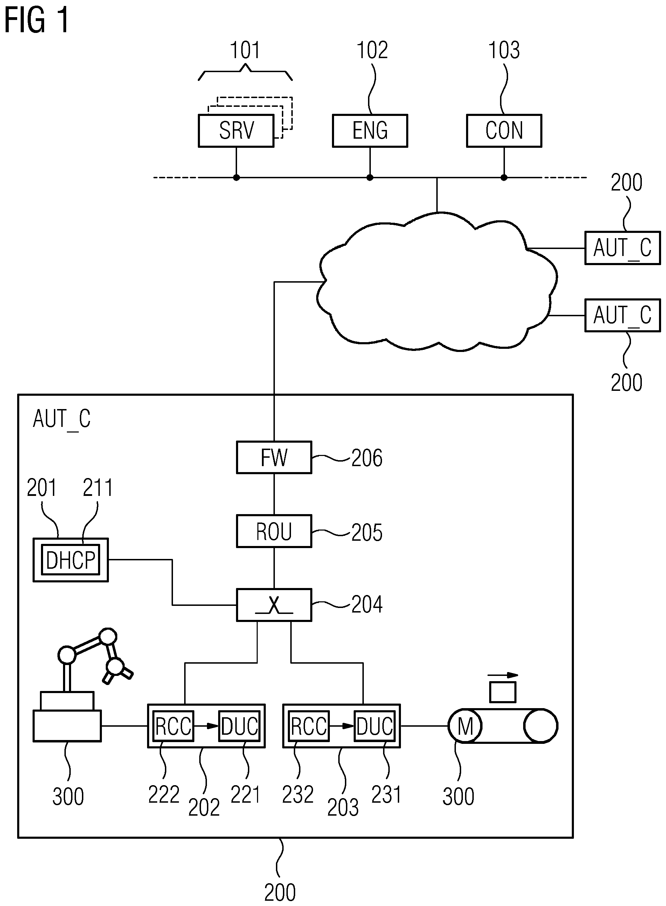

Das in Figur 1 dargestellte industrielle Automatisierungssystem umfasst Zellen 200 mit jeweils mehreren an einen Switch 204 angeschlossenen Automatisierungsgeräten 201-203, die im vorliegenden Ausführungsbeispiel über einen der jeweiligen Zelle 200 zugeordneten Router 205 mit einem Cloud-Computing-System 101 verbunden sind. Vorzugsweise ist dem Router 205 hierbei ein Firewall-System 206 vorgeschaltet. Grundsätzlich können sowohl der Switch 204 als auch das Firewall-System 206 in den Router 205 integriert sein. Das Cloud-Computing-System 101 umfasst jeweils mehrere Server-Einheiten, durch die IT-Infrastruktur, wie Speicherplatz, Rechenleistung oder Anwendungssoftware, als Dienst bereitgestellt wird. Insbesondere können die durch die Server-Einheiten bereitgestellten Dienste Anwendungen bzw. Funktionen zur System-, Prozess- und Geräteüberwachung, zur Gerätesteuerung und -konfiguration, zur Erfassung und Analyse von den Automatisierungsgeräten 201-203 zugeordneten Messwerten und Zustandsinformationen sowie Kommunikations- und Automatisierungsfunktionen umfassen.

Die Zellen 200 können beispielsweise über ein IP-basiertes Weitverkehrsnetz 104 oder über ein industrielles Kommunikationsnetz mit dem Cloud-Computing-System 101 verbunden sein. Im letztgenannten Fall tritt an die Stelle des Cloud-Computing-Systems 101 ein Edge- oder Fog-Computing-System, das funktional im Wesentlichen einem Cloud-Computing-System entspricht und gegenüber diesem eine unterschiedliche administrative Kontrolle aufweist. Im vorliegenden Ausführungsbeispiel sind die Zellen 200 über das Weitverkehrsnetz 104 außerdem mit einem Engineering-System 102 zur Projektierung von Automatisierungsgeräten, mit einem Leitsystem 103 zur Überwachung von Automatisierungsgeräten und mit einem DNS-Server (Domain Name System) 104 verbunden. Der DNS-Server 104 stellt insbesondere Informationen über Zuordnungen zwischen Gerätenamen und Kommunikationsnetzadressen entsprechend IETF RFC 1034 und IETF RFC 1035 für eine Namensauflösung bereit.

Die Automatisierungsgeräte 201-203 können beispielsweise Bedien- und Beobachtungsstationen, speicherprogrammierbare Steuerungen, RFID-Lesegeräte oder Systeme für maschinelle Bildverarbeitung sein. Neben den Automatisierungsgeräten 201-203 können auch Netzinfrastrukturgeräte, wie Switche, Router oder Firewalls, direkt oder mittelbar mit dem Router 205 bzw. mit dem Switch 204 verbunden sein. Diese Netzinfrastrukturgeräte dienen insbesondere zum Anschluss von speicherprogrammierbaren Steuerungen, Eingabe/Ausgabe-Einheiten (I/O-Module) oder Bedien- und Beobachtungsstationen des industriellen Automatisierungssystems. Eingabe/Ausgabe-Einheiten können als dezentrale Peripheriemodule ausgestaltet sein, die entfernt von einer speicherprogrammierbaren Steuerung angeordnet sind.

Speicherprogrammierbare Steuerungen umfassen üblicherweise jeweils ein Kommunikationsmodul, eine Zentraleinheit sowie zumindest eine Eingabe/Ausgabe-Einheit. Über Kommunikationsmodule können speicherprogrammierbare Steuerungen beispielsweise mit dem Router 205, mit dem Switch 204 bzw. mit einem Feldbus verbunden werden. Eingabe/Ausgabe-Einheiten dienen einem Austausch von Steuerungs- und Messgrößen zwischen speicherprogrammierbaren Steuerungen und durch die speicherprogrammierbaren Steuerungen gesteuerten Maschinen oder Vorrichtungen 300. Die Zentraleinheiten sind insbesondere für eine Ermittlung geeigneter Steuerungsgrößen aus erfassten Messgrößen vorgesehen. Obige Komponenten speicherprogrammierbarer Steuerungen werden vorzugsweise über ein Rückwandbus-System miteinander verbunden.

Bedien- und Beobachtungsstationen dienen zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere werden Bedien- und Beobachtungsstationen zur Anzeige von Werten eines Regelungskreises und zur Veränderung von Regelungsparametern verwendet. Bedien- und Beobachtungsstationen umfassen zumindest eine graphische Benutzerschnittstelle, ein Eingabegerät, eine Prozessoreinheit und ein Kommunikationsmodul.

Die Zellen 200 des in Figur 1 dargestellten industriellen Automatisierungssystems umfassen jeweils ein Automatisierungsgerät 201, das als Zell-Controller eine DHCP- bzw. DHCPv6-Servereinheit 211 zur Adress-, Namens- und/oder Namensdienstkonfiguration von Automatisierungsgeräten 202-203 innerhalb der jeweiligen Zelle 100 aufweist. Innerhalb des industriellen Automatisierungssystems sind also mehrere DHCP- bzw. DHCPv6-Servern vorgesehen.

Zumindest ausgewählte Automatisierungsgeräte 202-203 umfassen jeweils einen DNS Update Client 221, 231. Mittels ihres DNS Update Client 221, 231 steuern die ausgewählten Automatisierungsgeräte 202-203 ein Senden eines DNS Update Request mit einer Zuordnung zwischen ihrem jeweils zugeordneten Gerätenamen und zumindest einer jeweils konfigurierten Kommunikationsnetzadresse an den DNS-Server 104. Eine Zuordnung der Gerätenamen erfolgt vorzugsweise entsprechend EP 2 996 311 A1 bzw. EP 3 091 714 B1, auf deren Offenbarungsgehalt hier ausdrücklich Bezug genommen wird. Im vorliegenden Ausführungsbeispiel sind die Gerätenamen Fully Qualified Domain Names (FQDN), und die ausgewählten Automatisierungsgeräte 202-203 senden DNS Update Requests jeweils mittels ihres DNS Update Client 221, 231 selbst. Entsprechend einer alternativen Ausgestaltungsvariante werden die DNS Update Requests dagegen jeweils mittels der DHCP- bzw. DHCPv6-Servereinheit 211 gesendet. In diesem Fall steuern die ausgewählten Automatisierungsgeräte 202-203 mittels ihres DNS Update Client 221, 231 ein Senden eines DNS Update Request durch die DHCP- bzw. DHCPv6-Servereinheit 211.

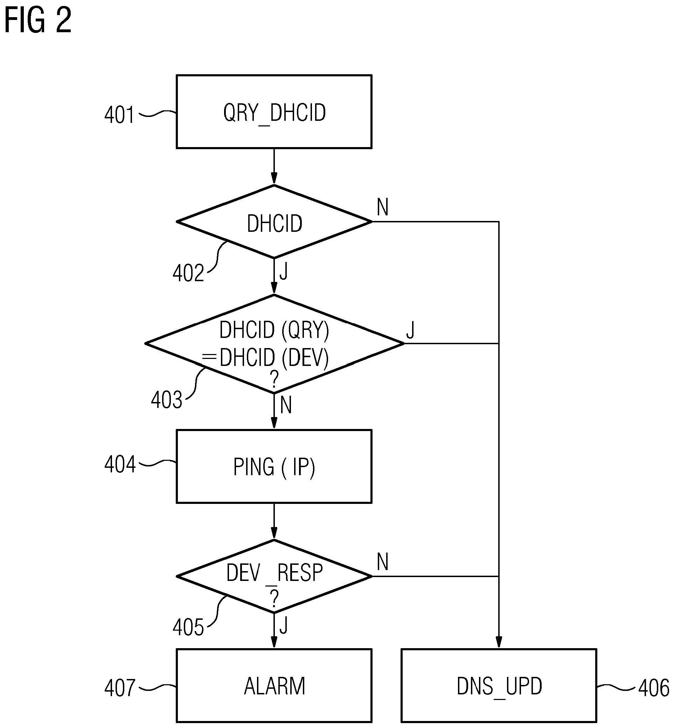

Den DNS Update Clients 221, 231 ist jeweils eine Kontroll-Komponente 222, 232 zugeordnet, die ein Senden eines DNS Update Request freigibt oder blockiert. Entsprechend Schritt 401 des in Figur 2 dargestellten Ablaufdiagramms fragen die Kontroll-Komponenten 222, 232 vor einem Freigeben oder Blockieren eines DNS Update Request für ein ausgewähltes Automatisierungsgerät 221, 231 jeweils ab, welcher Gerätekonfigurationsidentifikator dem Gerätenamen des jeweiligen ausgewählten Automatisierungsgeräts 202-203 im DNS-Server 104 zugeordnet ist. Die Gerätekonfigurationsidentifikatoren werden im Rahmen einer Adress-, Namens- bzw. Namensdienstkonfiguration erzeugt und sind im vorliegenden Ausführungsbeispiel Dynamic Host Configuration Identifier (DHCID) entsprechend IETF RFC 4701.

Entsprechend Schritt 402 ermitteln die Kontroll-Komponenten 222, 232, ob überhaupt eine Zuordnung eines Gerätekonfigurationsidentifikators vorliegt. Ist dies nicht der Fall, liegt eine Erst-Inbetriebnahme vor, und ein Senden eines DNS Update Request wird entsprechend Schritt 406 durch die jeweilige Kontroll-Komponente 222, 232 freigegeben. Hierdurch wird eine Registrierung der Zuordnung zwischen dem Gerätenamen und der Kommunikationsnetzadresse des jeweiligen Automatisierungsgeräts 202-203 im DNS-Server 104 veranlasst.

Bei einer bestehenden Zuordnung überprüfen die Kontroll-Komponenten 222, 232 dagegen entsprechend Schritt 403, ob der dem Gerätenamen des jeweiligen ausgewählten Automatisierungsgeräts 202-203 im DNS-Server 104 zugeordnete Gerätekonfigurationsidentifikator mit einem dem jeweiligen ausgewählten Automatisierungsgerät 202-203 zugeordneten Gerätekonfigurationsidentifikator übereinstimmt. Ist dies der Fall, liegt ein Adresswechsel oder ein Geräteumzug in eine andere Zelle vor, und ein Senden eines DNS Update Request wird entsprechend Schritt 406 durch die jeweilige Kontroll-Komponente 222, 232 freigegeben. Hierdurch wird eine Registrierung zumindest einer aktualisierten Kommunikationsnetzadresse des jeweiligen Automatisierungsgeräts 202-203 im DNS-Server 104 veranlasst.

Stimmen die Gerätekonfigurationsidentifikatoren nicht überein, führen die Kontroll-Komponenten 222, 232 entsprechend Schritt 404 jeweils eine Erreichbarkeitsüberprüfung zu zumindest einer dem jeweiligen Gerätenamen im DNS-Server 104 zugeordneten Kommunikationsnetzadresse durch. Die Erreichbarkeitsüberprüfung erfolgt vorzugsweise mittels Echo Request bzw. Ping entsprechend Internet Control Message Protocol (ICMP) bzw. Internet Control Message Protocol for the Internet Protocol Version 6 (ICMPv6). Dabei ist sicherzustellen, dass die Firewall-Systeme 206 der Zellen 200 entsprechend konfiguriert sind.

In Schritt 405 werten die Kontroll-Komponenten 222, 232 aus, ob ein Automatisierungsgerät 202-203 mittels Ping erreicht werden kann bzw. hierauf antwortet. Ist dies nicht der Fall, liegt ein Austausch eines zuvor verwendeten Automatisierungsgeräts durch ein Ersatz-Automatisierungsgerät mit identischem Gerätenamen vor, und ein Senden eines DNS Update Request wird entsprechend Schritt 406 durch die jeweilige Kontroll-Komponente 222, 232 freigegeben. Dementsprechend wird mittels des DNS Update Request eine Registrierung zumindest einer aktualisierten Kommunikationsnetzadresse des jeweiligen Automatisierungsgeräts im DNS-Server 104 veranlasst.

Kann mittels Ping ein Automatisierungsgerät 202-203 erreicht werden bzw. bei einer Antwort auf einen Echo Request, liegt eine mehrfache parallele Verwendung eines identischen Gerätenamens vor, und ein Senden des DNS Update Request wird entsprechend Schritt 407 durch die jeweilige Kontroll-Komponente 222, 232 blockiert. Im vorliegenden Ausführungsbeispiel wird in Schritt 407 zusätzlich eine Warnung über einen mehrfach zugeordneten Gerätenamen signalisiert.

## Patentansprüche

1. Verfahren zur Registrierung von industriellen Automatisierungsgeräten oder Kommunikationsgeräten zugeordneten Gerätenamen in einem Namensdienst-System, bei dem
- das Namensdienst-System zumindest einen Namensdienst-Server (104) umfasst, der Informationen über Zuordnungen zwischen Gerätenamen und Kommunikationsnetzadressen entsprechend einem Namensauflösungsprotokoll bereitstellt,
- zumindest ausgewählte Automatisierungs- oder Kommunikationsgeräte (202-203) jeweils eine Namensdienst-Komponente (221, 231) umfassen und mittels ihrer Namensdienst-Komponente ein Senden einer Registrierungsanforderung mit einer Zuordnung zwischen ihrem jeweils zugeordneten Gerätenamen und zumindest einer jeweils konfigurierten Kommunikationsnetzadresse an den Namensdienst-Server (104) steuern,
- den Namensdienst-Komponenten (221, 231) jeweils eine Kontroll-Komponente (222, 232) zugeordnet ist, die ein Senden einer Registrierungsanforderung freigibt oder blockiert,
- die Kontroll-Komponenten (222, 232) vor einem Freigeben oder Blockieren einer Registrierungsanforderung für ein ausgewähltes Automatisierungs- oder Kommunikationsgerät (202-203) jeweils abfragen (401), welcher Gerätekonfigurationsidentifikator dem Gerätenamen des jeweiligen ausgewählten Automatisierungs- oder Kommunikationsgeräts im Namensdienst-System zugeordnet ist,
- die Kontroll-Komponenten (222, 232) jeweils bei einer bestehenden Zuordnung überprüfen (403), ob der dem Gerätenamen des jeweiligen ausgewählten Automatisierungs- oder Kommunikationsgeräts (202-203) im Namensdienst-System zugeordnete Gerätekonfigurationsidentifikator mit einem dem jeweiligen ausgewählten Automatisierungs- oder Kommunikationsgerät zugeordneten Gerätekonfigurationsidentifikator übereinstimmt,
wobei
- die Kontroll-Komponenten (222, 232) jeweils bei einer fehlenden Zuordnung eines Gerätekonfigurationsidentifikators oder bei einem positiven Überprüfungsergebnis ein Senden der Registrierungsanforderung freigeben (406),
- die Kontroll-Komponenten (222, 232) jeweils bei einem negativen Überprüfungsergebnis ein Senden der Registrierungsanforderung in Abhängigkeit einer Erreichbarkeitsüberprüfung zu zumindest einer dem jeweiligen Gerätenamen im Namensdienst-System zugeordneten Kommunikationsnetzadresse blockieren (407),wobei
- die Kontroll-Komponenten jeweils bei einer bestehenden Erreichbarkeit eines Automatisierungs- oder Kommunikationsgeräts mit der dem jeweiligen Gerätenamen zugeordneten Kommunikationsnetzadresse ein Senden der Registrierungsanforderung blockieren,
- die Kontroll-Komponenten jeweils bei einer fehlenden Erreichbarkeit eines Automatisierungs- oder Kommunikationsgeräts mit der dem jeweiligen Gerätenamen zugeordneten Kommunikationsnetzadresse ein Senden der Registrierungsanforderung freigeben.

2. Verfahren nach Anspruch 1,
bei dem die Kontroll-Komponenten jeweils bei einer bestehenden Erreichbarkeit eines Automatisierungs- oder Kommunikationsgeräts mit der dem jeweiligen Gerätenamen zugeordneten Kommunikationsnetzadresse eine Warnung über einen mehrfach zugeordneten Gerätenamen signalisieren.

3. Verfahren nach einem der Ansprüche 1 oder 2,
bei dem die Erreichbarkeitsüberprüfung mittels Echo Request entsprechend Internet Control Message Protocol und/oder Internet Control Message Protocol for the Internet Protocol Version 6 erfolgt.

4. Verfahren nach einem der Ansprüche 1 bis 3,
bei dem mittels der Registrierungsanforderung bei einer fehlenden Zuordnung eines Gerätekonfigurationsidentifikators eine Registrierung der Zuordnung zwischen dem Gerätenamen und der Kommunikationsnetzadresse des jeweiligen Automatisierungs- oder Kommunikationsgeräts im Namensdienst-System veranlasst wird.

5. Verfahren nach einem der Ansprüche 1 bis 4,
bei dem mittels der Registrierungsanforderung bei einem positiven Überprüfungsergebnis und/oder bei einer fehlenden Erreichbarkeit eines Automatisierungs- oder Kommunikationsgeräts mit der dem jeweiligen Gerätenamen zugeordneten Kommunikationsnetzadresse eine Registrierung zumindest einer aktualisierten Kommunikationsnetzadresse des jeweiligen Automatisierungs- oder Kommunikationsgeräts im Namensdienst-System veranlasst wird.

6. Verfahren nach einem der Ansprüche 1 bis 5,
bei dem die Namensdienst-Komponenten jeweils einen Namensdienst-Client für dynamisches DNS umfassen und bei dem die ausgewählten Automatisierungs- oder Kommunikationsgeräte Registrierungsanforderungen jeweils mittels ihres Namensdienst-Client für dynamisches DNS senden.

7. Verfahren nach einem der Ansprüche 1 bis 6,
bei dem den ausgewählten Automatisierungs- oder Kommunikationsgeräten jeweils ein Konfigurationsserver zur Adress-, Namens- und/oder Namensdienstkonfiguration zugeordnet ist und bei dem Registrierungsanforderungen für die ausgewählten Automatisierungs- oder Kommunikationsgeräte jeweils mittels des zugeordneten Konfigurationsservers gesendet werden.

8. Verfahren nach Anspruch 7,
bei dem die ausgewählten Automatisierungs- oder Kommunikationsgeräte jeweils mittels ihrer Namensdienst-Komponente ein Senden einer Registrierungsanforderung durch den zugeordneten Konfigurationsservers steuern.

9. Verfahren nach einem der Ansprüche 7 oder 8,
bei dem der jeweils zugeordnete Konfigurationsserver ein DHCP- und/oder DHCPv6-Server ist.

10. Verfahren nach Anspruch 9,
bei dem die ausgewählten Automatisierungs- oder Kommunikationsgeräte einem industriellen Automatisierungs- oder Kommunikationssystem mit mehreren DHCP- und/oder DHCPv6-Servern zugeordnet sind.

11. Verfahren nach einem der Ansprüche 1 bis 10,
bei dem die Gerätenamen Fully Qualified Domain Names sind.

12. Verfahren nach einem der Ansprüche 1 bis 11,
bei dem der Namensdienst-Server Informationen über Zuordnungen zwischen Gerätenamen und Kommunikationsnetzadressen entsprechend IETF RFC 1034 und IETF RFC 1035 bereitstellt und bei dem die Registrierungsanforderungen DNS Update Requests sind.

13. Verfahren nach einem der Ansprüche 1 bis 12,
bei dem die Gerätekonfigurationsidentifikatoren im Rahmen einer Adress-, Namens- und/oder Namensdienstkonfiguration erzeugt werden und/oder Dynamic Host Configuration Identifier entsprechend IETF RFC 4701 sind.

14. Kontroll-Komponente zur Durchführung eines Verfahrens nach einem der Ansprüche 1 bis 13, wobei die Kontroll-Komponente dafür eingerichtet und ausgestaltet ist,
- ein durch eine Namensdienst-Komponente eines ausgewählten Automatisierungs- oder Kommunikationsgeräts gesteuertes Senden einer Registrierungsanforderung an einen Namensdienst-Server eines Namensdienst-Systems freizugeben oder zu blockieren,
wobei die Registrierungsanforderung eine Zuordnung zwischen einem Gerätenamen und zumindest einer konfigurierten Kommunikationsnetzadresse des ausgewählten Automatisierungs- oder Kommunikationsgeräts umfasst,
- vor einem Freigeben oder Blockieren einer Registrierungsanforderung für ein ausgewähltes Automatisierungs- oder Kommunikationsgerät abzufragen, welcher Gerätekonfigurationsidentifikator dem Gerätenamen des ausgewählten Automatisierungs- oder Kommunikationsgeräts im Namensdienst-System zugeordnet ist,
- bei einer bestehenden Zuordnung zu überprüfen, ob der dem Gerätenamen des ausgewählten Automatisierungs- oder Kommunikationsgeräts im Namensdienst-System zugeordnete Gerätekonfigurationsidentifikator mit einem dem ausgewählten Automatisierungs- oder Kommunikationsgerät zugeordneten Gerätekonfigurationsidentifikator übereinstimmt,
- bei einer fehlenden Zuordnung eines Gerätekonfigurationsidentifikators oder oei einem positiven Überprüfungsergebnis ein Senden der Registrierungsanforderung freizugeben,
- bei einem negativen Überprüfungsergebnis ein Senden der Registrierungsanforderung in Abhängigkeit einer Erreichbarkeitsüberprüfung zu zumindest einer dem jeweiligen Gerätenamen im Namensdienst-System zugeordneten Kommunikationsnetzadresse zu blockieren,
- bei einer bestehenden Erreichbarkeit eines Automatisierungs- oder Kommunikationsgeräts mit der dem jeweiligen Gerätenamen zugeordneten Kommunikationsnetzadresse ein Senden der Registrierungsanforderung zu blockieren,
- bei einer fehlenden Erreichbarkeit eines Automatisierungs- oder Kommunikationsgeräts mit der dem jeweiligen Gerätenamen zugeordneten Kommunikationsnetzadresse ein Senden der Registrierungsanforderung freizugeben.

## Claims

1. Method for registering device names assigned to industrial automation devices or communication devices in a name service system, in which
- the name service system comprises at least one name service server (104) which provides information relating to assignments between device names and communication network addresses according to a name resolution protocol,
- at least selected automation or communication devices (202-203) each comprise a name service component (221, 231) and, by means of their name service component, control transmission of a registration request containing an assignment between their respectively assigned device name and at least one respectively configured communication network address to the name service server (104),
- a control component (222, 232) is respectively assigned to the name service components (221, 231) and enables or blocks transmission of a registration request,
- before enabling or blocking a registration request for a selected automation or communication device (202-203), the control components (222, 232) each query (401) which device configuration identifier is assigned to the device name of the respective selected automation or communication device in the name service system,
- if an assignment exists, the control components (222, 232) each check (403) whether the device configuration identifier assigned to the device name of the respective selected automation or communication device (202-203) in the name service system corresponds to a device configuration identifier assigned to the respective selected automation or communication device, wherein
- if an assignment of a device configuration identifier is missing or in the event of a positive checking result, the control components (222, 232) each enable (406) transmission of the registration request,
- in the event of a negative checking result, the control components (222, 232) each block (407) transmission of the registration request on the basis of a reachability check for at least one communication network address assigned to the respective device name in the name service system, wherein
- if an automation or communication device having the communication network address assigned to the respective device name can be reached, the control components each block transmission of the registration request,
- if an automation or communication device having the communication network address assigned to the respective device name cannot be reached, the control components each enable transmission of the registration request.

2. Method according to Claim 1,
in which, if an automation or communication device having the communication network address assigned to the respective device name can be reached, the control components each signal a warning of a multiply assigned device name.

3. Method according to either of Claims 1 and 2,
in which the reachability check is carried out by means of an echo request according to the Internet Control Message Protocol and/or the Internet Control Message Protocol for the Internet Protocol Version 6.

4. Method according to one of Claims 1 to 3,
in which, if an assignment of a device configuration identifier is missing, registration of the assignment between the device name and the communication network address of the respective automation or communication device in the name service system is prompted by means of the registration request.

5. Method according to one of Claims 1 to 4,
in which, in the event of a positive checking result and/or if an automation or communication device having the communication network address assigned to the respective device name cannot be reached, registration of at least one updated communication network address of the respective automation or communication device in the name service system is prompted by means of the registration request.

6. Method according to one of Claims 1 to 5,
in which the name service components each comprise a name service client for dynamic DNS, and in which the selected automation or communication devices each transmit registration requests by means of their name service client for dynamic DNS.

7. Method according to one of Claims 1 to 6,
in which a configuration server for address, name and/or name service configuration is respectively assigned to the selected automation or communication devices, and in which registration requests for the selected automation or communication devices are respectively transmitted by means of the assigned configuration server.

8. Method according to Claim 7,
in which the selected automation or communication devices each control transmission of a registration request by the assigned configuration server using their name service component.

9. Method according to either of Claims 7 and 8,
in which the respectively assigned configuration server is a DHCP and/or DHCPv6 server.

10. Method according to Claim 9,
in which the selected automation or communication devices are assigned to an industrial automation or communication system having a plurality of DHCP and/or DHCPv6 servers.

11. Method according to one of Claims 1 to 10,
in which the device names are Fully Qualified Domain Names.

12. Method according to one of Claims 1 to 11,
in which the name service server provides information relating to assignments between device names and communication network addresses according to IETF RFC 1034 and IETF RFC 1035, and in which the registration requests are DNS Update Requests.

13. Method according to one of Claims 1 to 12,
in which the device configuration identifiers are generated within an address, name and/or name service configuration and/or are Dynamic Host Configuration Identifiers according to IETF RFC 4701.

14. Control component for carrying out a method according to one of Claims 1 to 13, wherein the control component is set up and configured
- to enable or block transmission of a registration request to a name service server of a name service system, which transmission is controlled by a name service component of a selected automation or communication device,
wherein the registration request comprises an assignment between a device name and at least one configured communication network address of the selected automation or communication device,
- before enabling or blocking a registration request for a selected automation or communication device, to query which device configuration identifier is assigned to the device name of the selected automation or communication device in the name service system,
- if an assignment exists, to check whether the device configuration identifier assigned to the device name of the selected automation or communication device in the name service system corresponds to a device configuration identifier assigned to the selected automation or communication device,
- if an assignment of a device configuration identifier is missing or in the event of a positive checking result, to enable transmission of the registration request,
- in the event of a negative checking result, to block transmission of the registration request on the basis of a reachability check for at least one communication network address assigned to the respective device name in the name service system,
- if an automation or communication device having the communication network address assigned to the respective device name can be reached, to block transmission of the registration request,
- if an automation or communication device having the communication network address assigned to the respective device name cannot be reached, to enable transmission of the registration request.

## Revendications

1. Procédé d'enregistrement de dénominations d'appareils associées à des appareils d'automatisation industriels ou à des appareils de communication dans un système de service de dénomination, dans lequel
- le système de service de dénomination comprend au moins un serveur (104) de système de dénomination, qui met à disposition des informations sur des associations entre des dénominations d'appareils et des adresses dans le réseau de communication correspondant à un protocole de résolution de dénomination,
- au moins des appareils (202-203) d'automatisation ou de communication sélectionnés comprennent chacun un composant (221, 231) de service de dénomination et commandent au serveur (104) de service de dénomination, au moyen de leurs composants de service de dénomination, une émission d'une requête d'enregistrement par une association entre leur dénomination d'appareil, qui leur est associée respectivement, et au moins une adresse dans le réseau de communication configurée respectivement,
- aux composants (220, 231) de service de dénomination est associé, respectivement, un composant (222, 232) de contrôle, qui valide une émission d'une requête d'enregistrement ou la bloque,
- les composants (222, 232) de contrôle demandent, avant une validation ou un blocage d'une requête d'enregistrement, pour un appareil (202-203) d'automatisation ou de communication sélectionné, l'identifiant de configuration d'appareil, qui est associé à la dénomination d'appareil de l'appareil d'automatisation ou de communication sélectionné, respectivement, dans le système de service de dénomination,
- les composants (222, 232) de contrôle contrôlent (403) chacun, pour une association existante, si l'identifiant de configuration d'appareil, associé dans le système de service de dénomination à la dénomination d'appareil de l'appareil (202-203) d'automatisation ou de communication sélectionné, respectivement, coïncide avec un identifiant de configuration d'appareil associé à l'appareil d'automatisation ou de communication sélectionné, respectivement,
dans lequel
- les composants (222, 232) de contrôle valident (406) une émission de la requête d'enregistrement, si une association d'un identifiant de configuration d'appareil est manquante ou si le résultat d'un contrôle est positif,
- les composants (222, 232) de contrôle bloquent (407), respectivement, si un résultat de contrôle est négatif, une émission de la requête d'enregistrement, en fonction d'un contrôle d'une possibilité d'atteindre au moins une adresse dans le réseau de communication, associée dans le système de service de dénomination à la dénomination d'appareil respective, dans lequel
- les composants de contrôle bloquent une émission de la requête d'enregistrement, respectivement, lorsqu'il existe une possibilité d'atteindre un appareil d'automatisation ou de communication par l'adresse dans le réseau de communication associée à la dénomination d'appareil respective,
- les composants de contrôle valident une émission de la requête d'enregistrement, respectivement, lorsqu'une possibilité d'atteindre un appareil d'automatisation ou de communication par l'adresse dans le réseau de communication associée à la dénomination d'appareil respective fait défaut.

2. Procédé suivant la revendication 1,
dans lequel les composants de contrôle signalent un avertissement sur une dénomination d'appareil associée plusieurs fois, s'il existe une possibilité d'atteindre un appareil d'automatisation ou de communication par l'adresse dans le réseau de communication associée à la dénomination d'appareil respective.

3. Procédé suivant l'une des revendications 1 ou 2,
dans lequel le contrôle de la possibilité d'atteindre a lieu au moyen d'Internet Control Message Protocol correspondant à Echo Request et/ou d'Internet Control Message Protocol pour l'Internet Protocol version 6.

4. Procédé suivant l'une des revendications 1 à 3,
dans lequel on provoque, dans le système de service de dénomination, au moyen de la requête d'enregistrement, si une association d'un identifiant fait défaut, un enregistrement de l'association entre la dénomination d'appareil et l'adresse dans le réseau de communication de l'appareil d'automatisation ou de communication respectif.

5. Procédé suivant l'une des revendications 1 à 4,
dans lequel on provoque, dans le système de service de dénomination, au moyen de la requête d'enregistrement, si un résultat de contrôle est positif et/ou si fait défaut une possibilité d'atteindre un appareil d'automatisation et de communication par l'adresse dans le réseau de communication associé à la dénomination d'appareil respective, un enregistrement au moins d'une adresse mise à jour dans le réseau de communication de l'appareil d'automatisation ou de communication respectif.

6. Procédé suivant l'une des revendications 1 à 5,
dans lequel les composants du service de dénomination comprennent chacun un client de service de dénomination pour un DNS dynamique et dans lequel les appareils d'automatisation ou de communication sélectionnés envoient des requêtes d'enregistrement, respectivement, au moyen de leur client de service de dénomination pour un DNS dynamique.

7. Procédé suivant l'une des revendications 1 à 6,
dans lequel, aux appareils d'automatisation et de communication sélectionnés, est associé, respectivement, un serveur de communication pour la configuration d'adresse, de dénomination et/ou de service de dénomination, et dans lequel des requêtes d'enregistrement, pour les appareils d'automatisation ou de communication sélectionnés, sont envoyées, respectivement, au moyen du serveur de configuration associé.

8. Procédé suivant la revendication 7,
dans lequel les appareils d'automatisation ou de communication sélectionnés commandent, respectivement, au moyen de leurs composants de service de dénomination, un envoi d'une requête d'enregistrement par le serveur de configuration associé.

9. Procédé suivant l'une des revendications 7 ou 8,
dans lequel le serveur de configuration associé, respectivement, est un serveur DHCP et/ou DHCPv6.

10. Procédé suivant la revendication 9,
dans lequel les appareils d'automatisation ou de communication sélectionnés sont associés à un système d'automatisation et de communication industriel ayant plusieurs serveurs DHCP et/ou DHCPv6.

11. Procédé suivant l'une des revendications 1 à 10,
dans lequel les dénominations d'appareil sont des Fully Qualified Domain Names.

12. Procédé suivant l'une des revendications 1 à 11,
dans lequel le serveur de service de dénomination met à disposition des associations de dénominations d'appareil et adresses dans le réseau de communication, conformément à IETF RFC 1034 et IETF RFC 1035 et dans lequel les requêtes d'enregistrement sont des DNS Update Requests.

13. Procédé suivant l'une des revendications 1 à 12,
dans lequel les identifiants de configuration d'appareil sont produits dans le cadre d'une configuration d'adresse, de dénomination et/ou de service de dénomination et/ou sont des Dynamic Host Configurations Identifier conformément à IETF RFC 4701.

14. Composant de contrôle pour effectuer un procédé suivant l'une des revendications 1 à 13, dans lequel le composant de contrôle est conçu et conformé pour
- valider ou bloquer une émission, commandée par un composant d'un service de dénomination d'un appareil d'automatisation ou de communication sélectionné, d'une requête d'enregistrement à un serveur de service de dénomination d'un système de service de dénomination,
dans lequel la requête d'enregistrement comprend une association entre une dénomination d'appareil et au moins une adresse dans le réseau de communication configurée de l'appareil d'automatisation ou de communication sélectionné,
- pour, avant une validation ou un blocage d'une requête d'enregistrement, pour un appareil d'automatisation ou de communication sélectionné, demander l'identifiant de configuration d'appareil, qui est associé à la dénomination d'appareil de l'appareil d'automatisation ou de communication sélectionné dans le système de service de dénomination,
- pour contrôler, pour une association existante, si l'identifiant de configuration d'appareil associé à la dénomination d'appareil de l'appareil d'automatisation ou de communication sélectionné dans le système de service de dénomination, coïncide avec un identifiant de configuration d'appareil associé à l'appareil d'automatisation ou de communication sélectionné,
- pour, si une association d'un identifiant de configuration d'appareil fait défaut ou si un résultat de contrôle est positif, valider une émission de la demande d'enregistrement,
- pour, si un résultat de contrôle est négatif, bloquer une émission de la requête d'enregistrement en fonction d'un contrôle de possibilité d'atteindre au moins une adresse dans le réseau de communication associé dans le système de service de dénomination à la dénomination d'appareil respective,
- pour, s'il existe une possibilité d'atteindre un appareil d'automatisation de communication par l'adresse dans le réseau de communication associé à la dénomination d'appareil respective, bloquer une émission de la requête d'enregistrement,
- pour, si une possibilité d'atteindre un appareil d'automatisation ou de communication par l'adresse dans le réseau de communication associé à la dénomination d'appareil respective fait défaut, valider une émission de la requête d'enregistrement.
